# EUROPEAN PATENT APPLICATION

(11) **EP 4 814 230 A1**
(43) Date of publication of application: **30.09.2026**
(21) Application number: 26167072.3
(22) Date of filing: 24.03.2026
(51) Int. Cl.: E04G 1/15, E04G 5/16, E04G 7/28

(54) **FASTENERS WITH LOW PROFILE HEADS FOR SCAFFOLDING AND FORMWORK ASSEMBLIES**

(30) Priority: 24.03.2025 US 202563776651 P
(71) Applicant: Atlantic Pacific Equipment, LLC, Roswell, GA 30076 (US)
(72) Inventor: Nguyen, Trai, Roswell, 30076 (US)
(74) Representative: Hahner, Ralph

(57) **Abstract**

A scaffolding assembly includes a horizontal support, a deck plank, and an anti-lift off system. The deck plank is removably supported on the horizontal support. The anti-lift off system includes a plate aligned with the horizontal support and a plurality of fasteners. One of the plurality of fasteners extends through the plate and into the horizontal support to secure the deck plank to the horizontal support to prevent unintentional lift off and removal of the deck plank from the horizontal support during use of the scaffolding assembly.

## Description

### CROSS REFERENCE TO RELATED APPLICATIONS

This application claims priority to and the benefit of U.S. Provisional Patent Application Number 63/776,651, filed 24 March 2025, the disclosure of which is now expressly incorporated herein by reference.

### FIELD OF THE DISCLOSURE

The present disclosure relates generally to scaffolding assemblies, and more specifically to fasteners for use with deck planks of scaffolding assemblies.

### BACKGROUND

Scaffolding assemblies are commonly used to provide vertical support for structures as well as for use in defining a raised work platform adjacent a structure. Scaffolding assemblies are also used for providing temporary structures such as work platforms or removable bleacher-type seating.

Scaffolding assemblies allow workers to build, repair, clean, etc. structures or buildings. Typical scaffolding assemblies include a plurality of vertical posts connected by horizontal and/or diagonal supports. The horizontal supports may include horizontal ledgers and horizontal beams. Horizontal beams provide structural support for the scaffolding assemblies, and the vertical posts, the horizontal ledgers, and the diagonal supports provide support for different floors of the scaffolding assemblies.

Deck planks extend between and are supported on the horizontal supports to provide a working surface for workers on each level of the scaffolding assemblies above ground. Accessories and connection components of the scaffolding assemblies may be coupled to the vertical posts and the horizontal supports to provide modular and customizable scaffolding assemblies. Scaffolding assemblies may allow for convenient connection of components together.

### SUMMARY

The present disclosure may comprise one or more of the following features and combinations thereof.

A scaffolding assembly may include a horizontal support, a deck plank, and an anti-lift off system. The deck plank may be removably supported on the horizontal support. The deck plank may include a platform that provides a work surface for a user of the scaffolding assembly and at least one attachment member coupled to the platform and supported by the horizontal support. The anti-lift off system may include a plate and a plurality of fasteners in which each of the plurality of fasteners is substantially similar. The plate may be aligned with the horizontal support and may extend over the at least one attachment member of the deck plank. The plurality of fasteners may include a first fastener and a second fastener. The first fastener may extend through the plate and into the horizontal support to secure the deck plank to the horizontal support to prevent unintentional lift off and removal of the deck plank from the horizontal support during use of the scaffolding assembly. The second fastener may be arranged to engage the first fastener to rotate the first fastener relative to the plate and the horizontal support thereby causing the first fastener to secure the deck plank to the horizontal support.

In some embodiments, each of the plurality of fasteners may include a head, a body extending away from the head, and a first protrusion extending away from the head opposite the body to locate the head between the first protrusion and the body. The first protrusion of the second fastener may engage the first protrusion of the first fastener to rotate the first fastener relative to the plate and the horizontal support thereby causing the first fastener to secure the deck plank to the horizontal support.

In some embodiments, the first protrusion of each of the plurality of fasteners may define a first surface, a second surface extending between the first surface and the head, and a third surface opposite the second surface and extending between the first surface and the head. The second side of the first protrusion of the second fastener may engage the second side of the first protrusion of the first fastener to rotate the first fastener relative to the plate and the horizontal support.

In some embodiments, each of the plurality of fasteners may further include a second protrusion extending away from the head in spaced apart relation to the first protrusion. The first protrusion of each of the plurality of fasteners may define a first surface, a second surface extending between the first and the head, and a third surface opposite the second surface and extending between the first surface and the head. The second protrusion of each of the plurality of fasteners may define a first surface, a second surface extending between the first surface of the second protrusion and the head, and a third surface opposite the second surface of the second protrusion and extending between the first surface of the second protrusion and the head.

In some embodiments, the second surface of the first protrusion may be in a first plane and the third surface of the second protrusion may be in the first plane. The third surface of the first protrusion may be in a second plane different than the first plane and the second surface of the second protrusion may be in the second plane.

In some embodiments, the second surface of the first protrusion of the second fastener may engage the second surface of the first protrusion of the first fastener and the third surface of the second protrusion of the second fastener may engage the third surface of the second protrusion of the first fastener to rotate the first fastener relative to the plate and the horizontal support. The first fastener may be moveable relative to the horizontal support and the plate between a first position, in which the first fastener is free for removal from the horizontal support and the plate to allow the deck plank to be separated from the horizontal support, and a second position, in which the first fastener is rotated relative to the horizontal support and the plate by the second fastener so that the first fastener is blocked from being removed from the horizontal support and the plate thereby blocking the deck plank from lifting off of and being removed from the horizontal support.

In some embodiments, the body of each of the plurality of fasteners may include a shaft coupled to the head and extending away therefrom and a base coupled to the shaft to locate the shaft between the head and the base. The base of each of the plurality of fasteners may define a first width and a first length. The first length may be greater than the first width.

In some embodiments, the base of each of the plurality of fasteners may define a first chamfered edge, a second chamfered edge opposite the first chamfered edge, a third edge located between the first chamfered edge and the second chamfered edge, and a fourth edge opposite the third edge. The third edge and the fourth edge may both define right angles.

In some embodiments, the horizontal support may include a rail having an opening that extends into the rail to receive the first fastener. The at least one attachment member of the deck plank may extend over the rail of the horizontal support.

In some embodiments, the opening of the rail may include a first portion at a bottom end of the opening and a second portion at a top end of the opening adjacent the plate of the anti-lift off system. The first portion may have a second width and the second portion may have a third width that is less than the second width.

In some embodiments, the first fastener may be located in the opening of the rail so that the shaft of the first fastener is located within the second portion of the opening and the base of the first fastener is located within the first portion of the opening. While the first fastener is in the first position, the first width of the base may allow the first fastener to be removed from the opening of the rail. The first width may be less than the third width of the second portion of the opening.

In some embodiments, while the first fastener is in the second position, the first length of the base may block removal of the first fastener from the opening of the rail. The first length may be greater than the third width of the second portion of the opening.

In some embodiments, the shaft may be non-threaded. The shaft may be formed to include threads. The head of each of the plurality of fasteners may be formed to include a first slot extending into the head from an outer surface thereof toward the body. The first slot may extend into the head along an entirety of a diameter of the head. The head of each of the plurality of fasteners may be formed to include a second slot extending into the head from a bottom surface of the first slot toward the body. The second slot may extend into the head along only a portion of the diameter of the head. The first protrusion and a portion of the head that extends outwardly beyond the plate may have a height of about 4 millimeters or less.

A method may include inserting a first fastener through a plate and into a horizontal support so that at least a portion of a head of the first fastener is located exterior to the plate; positioning a head of a second fastener on top of the head of the first fastener; engaging a first protrusion of the first fastener with a first protrusion of the second fastener; rotating the second fastener in a first direction to cause the first fastener to rotate in the first direction relative to the plate and the horizontal support to block removal of the first fastener from the plate and the horizontal support; and blocking separation of the plate from the horizontal support via the first fastener.

In some embodiments, engaging a first protrusion of the first fastener with a first protrusion of the second fastener may include engaging a second protrusion of the first fastener with a second protrusion of the second fastener. The method may further comprise, after rotating the second fastener in a first direction, moving the second fastener away from the first fastener.

In some embodiments, the method may further comprise, after blocking separation of the plate from the horizontal support via the first fastener: positioning the head of the second fastener on top of the head of the first fastener; engaging the first protrusion of the first fastener with the first protrusion of the second fastener; rotating the second fastener in a second direction opposite the first direction to cause the first fastener to rotate in the second direction relative to the plate and the horizontal support; removing the first fastener from the plate and the horizontal support; and separating the plate from the horizontal support.

In some embodiments, positioning a head of a second fastener on top of the head of the first fastener may include engaging an outer surface of the head of the first fastener with a first surface of the first protrusion of the second fastener and engaging an outer surface of the head of the second fastener with a first surface of the first protrusion of the first fastener. Rotating the second fastener in a first direction may include rotating the first fastener about 90 degrees.

In some embodiments, the method may further comprise inserting a body of the first fastener into an opening formed in the horizontal support. The opening may have a first portion at a bottom end of the opening and a second portion at a top end of the opening adjacent the plate. The first portion may have a first width and the second portion may have a second width that is less than the first width.

In some embodiments, after inserting a body of the first fastener into an opening and before rotating the second fastener in a first direction, the first fastener may be free for removal from the plate and the horizontal support. Rotating the second fastener in a first direction may include blocking removal of the first fastener from the opening via engagement of the body of the first fastener with the second portion of the opening.

In some embodiments, the method may further comprise positioning at least one attachment member of a deck plank on the horizontal support to support the deck plank on the horizontal support. The method may further comprise positioning the plate over the at least one attachment member and the horizontal support to locate the at least one attachment member between the plate and the horizontal support.

According to another aspect of the present disclosure, a fastener may include a head, a body extending away from the head, a first protrusion, and a second protrusion. The first protrusion may extend away from the head opposite the body to locate the head between the first protrusion and the body. The second protrusion may extend away from the head in spaced apart relation to the first protrusion. The first protrusion and the second protrusion may be configured to be engaged to rotate the fastener thereby causing the fastener to secure components to one another.

In some embodiments, the first protrusion may define a first surface, a second surface extending between the first surface and the head, and a third surface opposite the second surface and extending between the first surface and the head. In some embodiments, the second protrusion may define a first surface, a second surface extending between the first surface of the second protrusion and the head, and a third surface opposite the second surface of the second protrusion and extending between the first surface of the second protrusion and the head.

In some embodiments, the second surface of the first protrusion may be in a first plane and the third surface of the second protrusion may be in the first plane. The third surface of the first protrusion may be in a second plane different than the first plane and the second surface of the second protrusion may be in the second plane. The body may include a shaft coupled to the head and extending away therefrom and a base coupled to the shaft to locate the shaft between the head and the base. The base may define a first width and a first length. The first length may be greater than the first width.

In some embodiments, the base may define a first chamfered edge, a second chamfered edge opposite the first chamfered edge, a third edge located between the first chamfered edge and the second chamfered edge, and a fourth edge opposite the third edge. The third edge and the fourth edge may both define right angles. The shaft may be non-threaded. The shaft may be formed to include threads.

In some embodiments, the head may be formed to include a first slot extending into the head from an outer surface thereof toward the body. The first slot may extend into the head along an entirety of a diameter of the head. The head may be formed to include a second slot extending into the head from a bottom surface of the first slot toward the body. The second slot may extend into the head along only a portion of the diameter of the head.

### BRIEF DESCRIPTION OF THE DRAWINGS

Fig. 1 is an exploded perspective view of a scaffolding assembly configured to support workers above ground on the outside of a building or other structure, the scaffolding assembly includes a deck plank removably supported on each end by spaced apart horizontal supports to provide a work surface for a worker and an anti-lift off system configured to secure the deck plank to at least one of the horizontal supports to block the deck plank from being lifted off of and separated from the horizontal support;
Fig. 2 is a perspective view of the scaffolding assembly of Fig. 1 showing that the anti-lift off system includes a plate aligned with the horizontal support and extending over hooks of the deck plank and a plurality of fasteners that extend through the plate and into the horizontal support to cooperate with a latch on the bottom of the deck plank, and further showing that each of the plurality of fasteners is substantially similar to one another;
Fig. 3 is a perspective view of a first fastener of the plurality of fasteners of Fig. 1 showing that the first fastener includes a head, a body extending away from the head, and two protrusions that are spaced apart from one another and extending away from the head opposite the body;
Fig. 4 is a front view of the first fastener of Fig. 3 showing that the body of the first fastener includes a shaft extending away from the head and a base coupled to the shaft opposite the head, and further showing that a front surface of the base defines a first length;
Fig. 5 is a side view of the first fastener of Fig. 3 showing that a side surface of the base defines a second length that is greater than the first length of the front surface;
Fig. 6 is a top view of the first fastener of Fig. 3 showing that the head of the first fastener is formed to include two slots that extend into the head toward the body, and the two protrusions are located on opposing sides of the slots;
Fig. 7 is a bottom view of the first fastener of Fig. 3 showing that the base of the first fastener defines two chamfered edges;
Fig. 8 is a side view of the scaffolding assembly of Fig. 1 showing that the first fastener extends through the plate of the anti-lift off system and into an opening of the horizontal support, and further showing that the first length of the front surface of the base is less than a minimum width of the opening so that the first fastener is free for removal from the horizontal support and the deck plank is free for separation from the horizontal support;
Fig. 9 is a top view of the scaffolding assembly of Fig. 8 showing that the slots of the first fastener extend along the horizontal support while the first fastener is free for removal from the horizontal support;
Fig. 10 is a side view of the scaffolding assembly of Fig. 1 showing that a second fastener of the plurality of fasteners is used to rotate the first fastener;
Fig. 11 is a side view of the scaffolding assembly of Fig. 10 showing that the two protrusions of the second fastener engage the two protrusions of the first fastener to rotate the first fastener relative to the plate and the horizontal support thereby securing the deck plank to the horizontal support;
Fig. 12 is a side view of the scaffolding assembly of Fig. 11 after the first fastener is rotated by the second fastener, the second length of the side surface of the base is greater than the minimum width of the opening of the horizontal support so that the first fastener is blocked from being removed from the horizontal support and the deck plank is blocked from lift off from the horizontal support;
Fig. 13 is a top view of the scaffolding assembly of Fig. 12 showing that the slots of the first fastener extend perpendicular to the horizontal support while the first fastener is blocked from being removed from the horizontal support; and
Fig. 14 is another embodiment of an anti-lift off system for use with the scaffolding assembly of Fig. 1 showing that a first fastener of a plurality of fasteners includes a threaded shaft.

### DETAILED DESCRIPTION OF THE DRAWINGS

For the purposes of promoting an understanding of the principles of the disclosure, reference will now be made to a number of illustrative embodiments illustrated in the drawings and specific language will be used to describe the same.

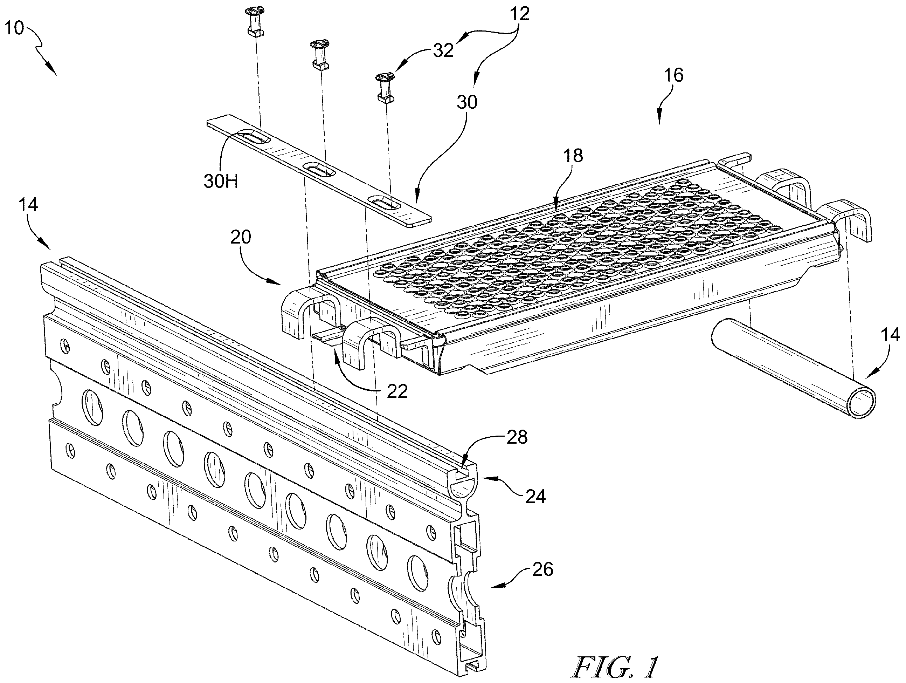

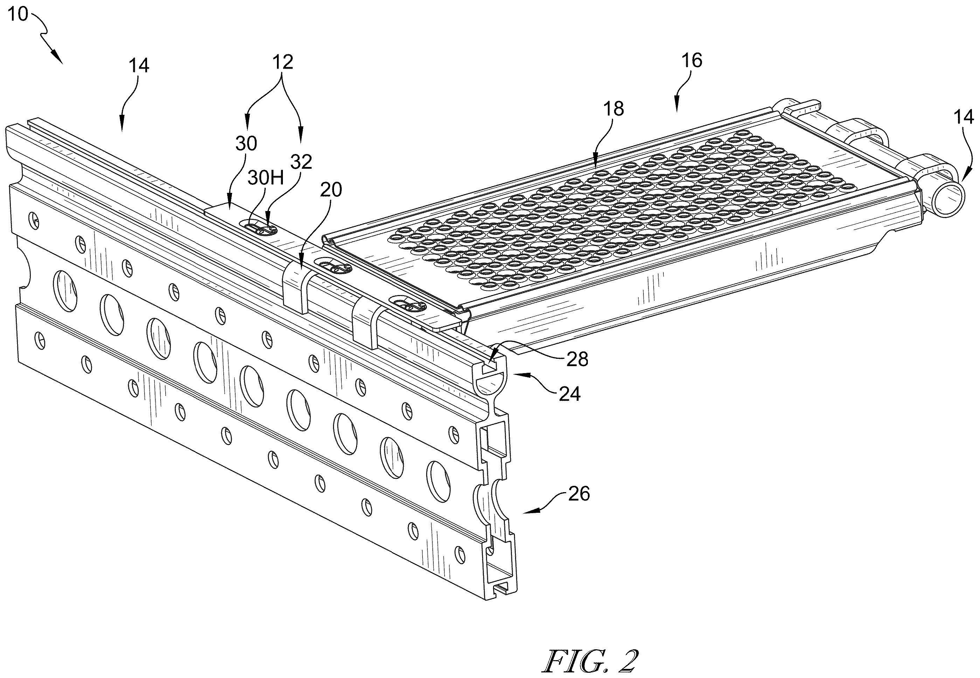

An anti-lift off system 12 for use with a scaffolding assembly 10 is shown in Figs. 1 and 2. The scaffolding assembly 10 is configured to support workers above ground on the outside of a building or other structure. The scaffolding assembly 10 allows the workers to build, repair, clean, etc. the building or other structure. The illustrative scaffolding assembly 10 includes a horizontal support 14, a deck plank 16, and the anti-lift off system 12. Illustratively, the scaffolding assembly 10 may include any number of horizontal supports 14, deck planks 16, and anti-lift off systems 12. The horizontal supports 14 may extend between and interconnect any combination of vertical scaffolding posts, wall mounts, beams, adapters, or any other suitable alternative. The horizontal supports 14 may take any variety of shapes and are illustratively shown as a beam and a round ledger tube. However, other shapes of horizontal supports are contemplated by this disclosure.

The deck plank 16 is removably supported at each end on the horizontal supports 14, as shown in Fig. 2, to provide a work surface for the workers above ground. The anti-lift off system 12 secures the deck plank 16 to one or more of the horizontal supports 14 to prevent unintentional removal or lift off of the deck plank 16 from the horizontal support 14, for example, in the event of a gust of wind or another force acting on the deck plank 16.

The deck plank 16 includes a platform 18, at least one attachment member 20, and a wind latch 22, as shown in Figs. 1 and 2. The platform 18 provides the work surface for the workers upon which the workers may stand and rest tools and equipment. In some embodiments, the deck plank 16 may be formed from a single or any number of components.

The at least one attachment member 20 is coupled to the platform 18, as shown in Figs. 1 and 2. The at least one attachment member 20 is supported by the horizontal support 14 to couple the platform 18 to the horizontal support 14. In some embodiments, the at least one attachment member 20 is hook shaped. In some embodiments, the deck plank 16 includes two attachment members 20 coupled to each end of the platform 18, as shown in Fig. 1. Any number of attachment members 20 is contemplated.

The wind latch 22 is coupled to the platform 18, as shown in Fig. 1. The wind latch 22 engages the horizontal support 14 opposite the at least one attachment member 20 to help prevent lift off of the deck plank 16 from the horizontal support 14. The wind latch 22 may cooperate with the anti-lift off system 12 to secure the deck plank 16 with the horizontal support 14. The wind latch 22 may extend fully below horizontal supports 14 that are tube ledgers or other ledger types that do not have structure that extends below and would interfere with the wind latch 22. However, horizontal beams or tubular ledgers having a relatively large height or other structure extending downwardly may interfere with a path of the wind latch 22 and reduce the effectiveness of the wind latch 22 because the wind latch 22 may not be able to extend at about a 90 degree angle. The present disclosure may be beneficial with assemblies having horizontal supports 14 that interfere with the wind latch 22.

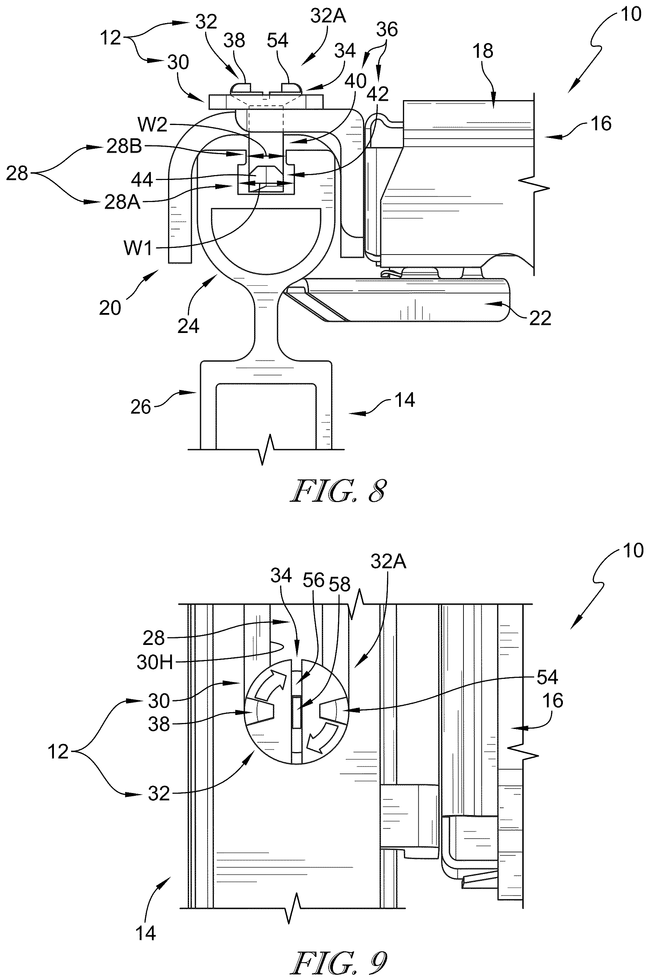

The horizontal support 14 includes a rail 24 and a support beam 26 coupled to the rail 24, as shown in Figs. 1 and 2. The at least one attachment member 20 extends over the rail 24, and the wind latch 22 engages the rail 24 opposite the at least one attachment member 20, as shown in Fig. 8. In some embodiments, the support beam 26 is omitted such that the horizontal support 14 comprises a horizontal ledger. In other embodiments, the horizontal support 14 includes a beam having different geometry, but having a T-slot opening 28.

The rail 24 includes an opening 28 extending into the rail 24 toward the support beam 26, as shown in Figs. 1 and 2. The opening 28 receives a portion of the anti-lift off system 12 therein. The opening 28 includes a first portion 28A at a bottom end of the opening 28 adjacent the support beam 26 and a second portion 28B at a top end of the opening 28 adjacent the at least one attachment member 20. The first portion 28A has a first width W1, and the second portion 28B has a second width W2, as shown in Fig. 8. In illustrative embodiments, the first width W1 is greater than the second width W2. The opening 28 may be referred to as a T-slot or T-bolt slot.

The anti-lift off system 12 includes a plate 30 and a plurality of fasteners 32, as shown in Figs. 1 and 2. The plate 30 is aligned with the rail 24 of the horizontal support 14. At least one of the plurality of fasteners 32 extends through the plate 30 and into the horizontal support 14 to secure the deck plank 16 to the horizontal support 14 thereby preventing unintentional lift off and removal of the deck plank 16 from the horizontal support 14 during use of the scaffolding assembly 10. The plate 30 and the plurality of fasteners 32 allow for installation and removal of the anti-lift off system 12 from above the deck plank 16. For example, a worker may be supported on the work surface of the platform 18 (as opposed to below the platform 18) or on an adjacent work surface of another platform while installing or removing the anti-lift off system 12.

The plate 30 extends along the rail 24 of the horizontal support 14 and over the at least one attachment member 20, as shown in Fig. 2. The at least one attachment member 20 is located between the plate 30 and the horizontal support 14. The plate 30 is formed to include at least one through hole 30H, as shown in Fig. 2. The at least one through hole 30H is aligned with the opening 28 of the rail 24 of the horizontal support 14. As shown in Fig. 1, the at least one through hole 30H is formed as an elongated slot, which allows for various positioning of the plurality of fasteners 32 within the elongated slot.

In some embodiments, the at least one through hole 30H includes two through holes 30H horizontally spaced apart from one another. In some embodiments, the at least one through hole 30H includes three through holes 30H horizontally spaced apart from one another. Any number of through holes 30H is contemplated. The plate 30 may extend over the at least one attachment member 20 such that one through hole 30H is located on a first lateral side of the at least one attachment member 20 and another through hole 30H is located on an opposite second lateral side of the at least one attachment member 20.

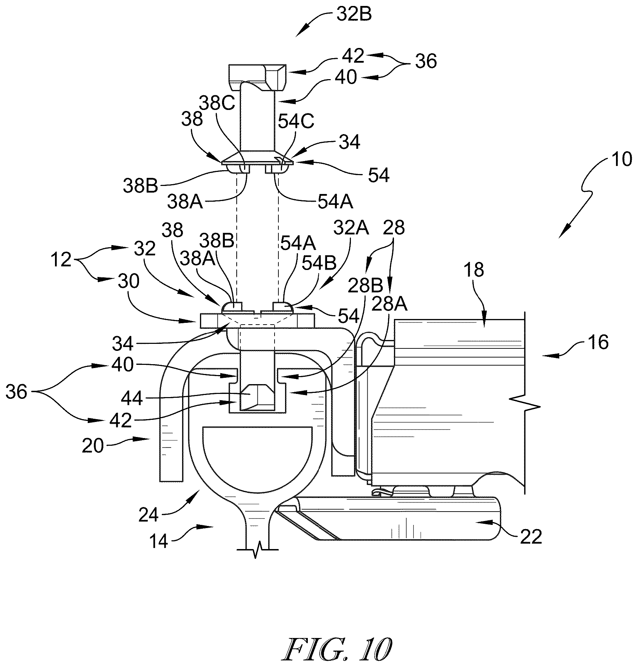

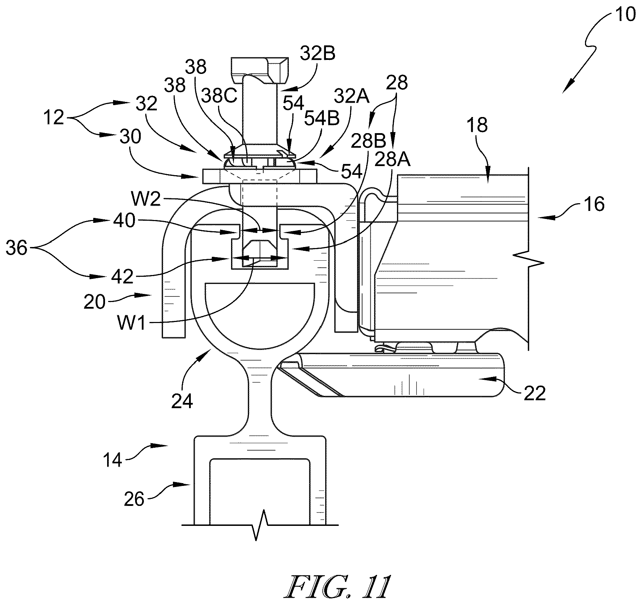

As shown in Figs. 1 and 2, each of the plurality of fasteners 32 is substantially similar to one another. The plurality of fasteners 32 illustratively includes a first fastener 32A and a second fastener 32B. The first fastener 32A extends through the plate 30 and into the opening 28 of the rail 24 of the horizontal support 14. The second fastener 32B is used as an installation tool or aid for the first fastener 32A. The second fastener 32B engages the first fastener 32A, as shown in Figs. 10 and 11, to rotate the first fastener 32A. The rotation of the first fastener 32A by the second fastener 32B secures the plate 30 to the horizontal support 14 via the first fastener 32A. Because the plate 30 extends over the at least one attachment member 20, the deck plank 16 is secured to the horizontal support 14 via the plate 30 and the first fastener 32A such that lift off of the deck plank 16 is prevented. In this way, other tools or installation aids for the first fastener 32A may not be used.

Generally, workers assembling scaffolding assemblies may not carry a screwdriver or other tool configured to rotate fasteners, such as the first fastener 32A. However, workers typically carry extra fasteners with them. Thus, the plurality of fasteners 32 allows the workers to secure the deck plank 16 to the horizontal support 14 using the fasteners 32 themselves without the need for an additional installation tool. It should be appreciated that the fasteners 32 may be used on other components of the scaffolding assembly and are not limited to use with the plate 30 and deck planks 16.

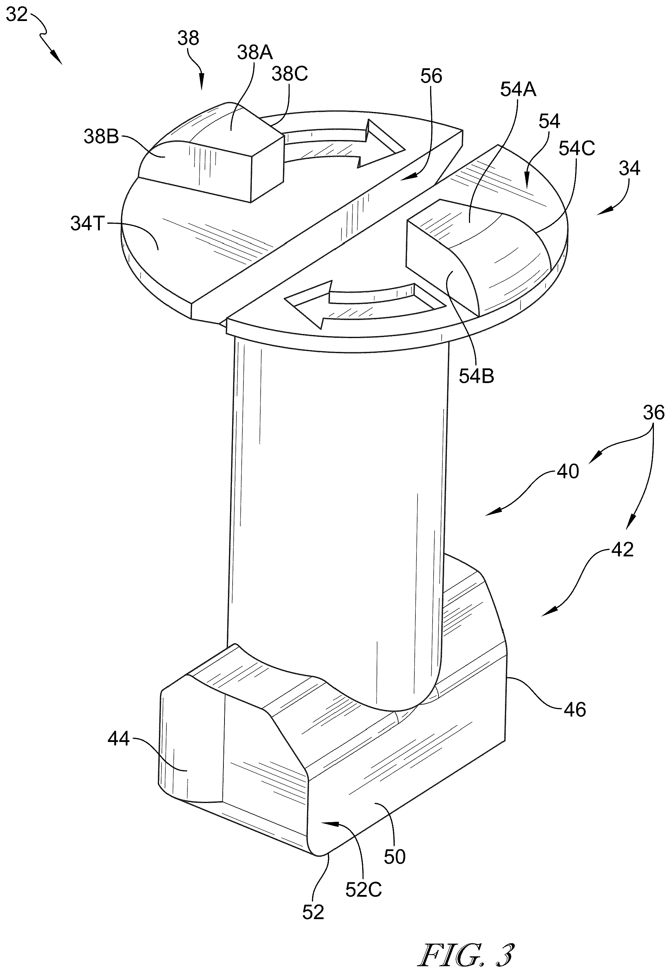

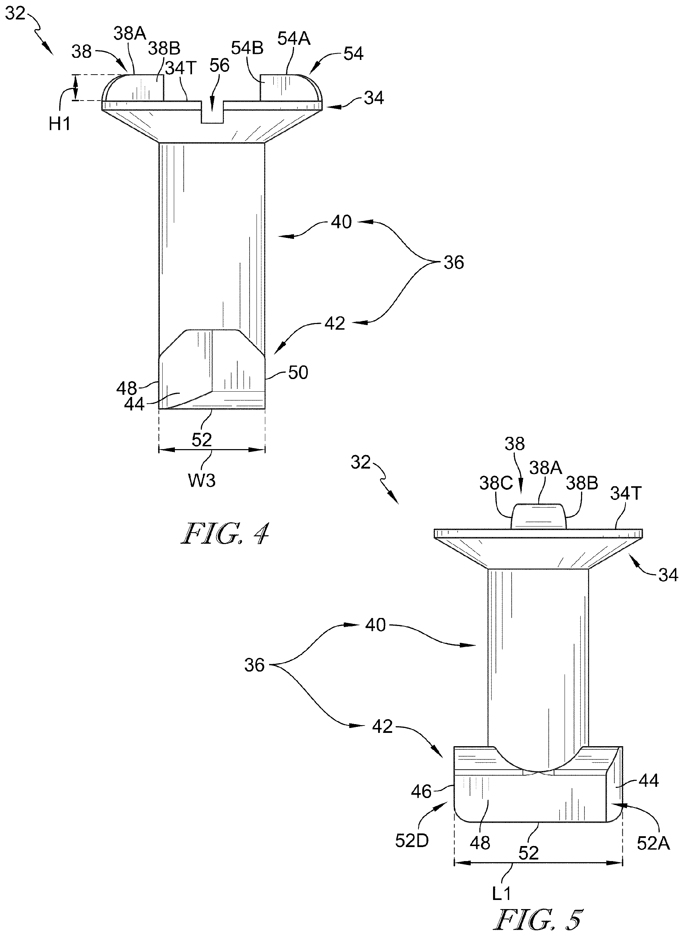

Each of the plurality of fasteners 32 includes a head 34, a body 36, and a first protrusion 38, as shown in Fig. 3. The head 34 tapers as the head 34 extends from the first protrusion 38 to the body 36, as shown in Figs. 4 and 5. The body 36 extends away from the head 34, and the first protrusion 38 extends away from the head 34 in a direction opposite the body 36.

In some embodiments, the head 34 has a diameter of about 20 to about 30 millimeters. In some embodiments, the head 34 has a diameter of about 24.87 millimeters. In some embodiments, an angle formed between the tapered head 34 and the body 36 is about 120 degrees.

In some embodiments, the body 36 includes a shaft 40 and a base 42, as shown in Figs. 3-5. The shaft 40 is coupled to the head 34 to extend away from the head 34. The base 42 is coupled to the shaft 40 to locate the shaft 40 between the head 34 and the base 42. In some embodiments, as shown in Figs. 4 and 5, the shaft 40 is non-threaded. In some embodiments, the shaft 40 is threaded.

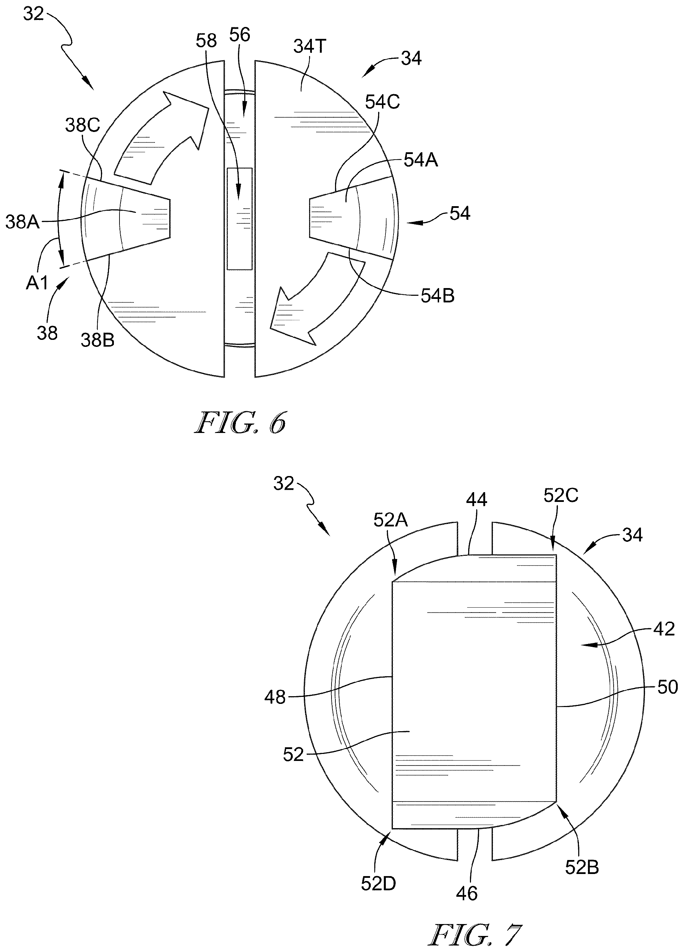

The base 42 of each of the plurality of fasteners 32 may include a first surface 44, a second surface 46 opposite the first surface 44, a third surface 48 interconnecting the first and second surfaces 44, 46, and a fourth surface 50 opposite the third surface 48, as shown in Figs. 4 and 5. The first and second surfaces 44, 46 define non-planar surfaces, and the third and fourth surfaces 48, 50 define substantially planar surfaces, as shown in Fig. 7.

The base 42 of each of the plurality of fasteners 32 may further include a bottom surface 52 facing away from the shaft 40, as shown in Fig. 7. The bottom surface 52 interconnects the surfaces 44, 46, 48, 50. The base 42 has a first edge 52A, a second edge 52B opposite the first edge 52A, a third edge 52C located between the first edge 52A and the second edge 52B, and a fourth edge 52D opposite the third edge 52C. The first edge 52A is formed at the intersection of the first surface 44 and the third surface 48, as shown in Fig. 5. The first edge 52A illustratively forms a chamfered edge. The second edge 52B is formed at the intersection of the second surface 46 and the fourth surface 50, as shown in Fig. 7. The second edge 52B illustratively forms a chamfered edge. The third edge 52C is formed at the intersection of the first surface 44 and the fourth surface 50. The third edge 52C illustratively forms an edge defining a right angle. The fourth edge 52D is formed at the intersection of the second surface 46 and the third surface 48. The fourth edge 52D illustratively forms an edge defining a right angle.

As shown in Fig. 4, the base 42 defines a third width W3 between the third surface 48 and the fourth surface 50. In some embodiments, the third width W3 is about 10 millimeters to about 15 millimeters. In some embodiments, the third width W3 is about 12 millimeters. As shown in Fig. 5, the base 42 defines a first length L1 defined between the first surface 44 and the second surface 46. In some embodiments, the first length L1 is about 15 millimeters to about 25 millimeters. In some embodiments, the first length L1 is about 20.5 millimeters. In illustrative embodiments, the first length L1 is greater than the third width W3.

The first protrusion 38 extends away from the head 34, as shown in Fig. 3 .The first protrusion 38 of the first fastener 32A engages the first protrusion 38 of the second fastener 32B, as suggested in Figs. 10 and 11, to rotate the first fastener 32A relative to the plate 30 and the horizontal support 14 thereby causing the first fastener 32A to secure the deck plank 16 to the horizontal support 14 to prevent unintentional lift off and removal of the deck plank 16 from the horizontal support 14.

The first protrusion 38 of each of the plurality of fasteners 32 defines a first surface 38A, a second surface 38B, and a third surface 38C, as shown in Figs. 3 and 6. At least a portion of the first surface 38A is spaced apart from and parallel to an outer surface 34T of the head 34. The second surface 38B extends between the first surface 38A and the outer surface 34T of the head 34. The third surface 38C is located opposite the second surface 38B and extends between the first surface 38A and the outer surface 34T of the head 34.

In some embodiments, an angle A1 formed between the second surface 38B and the third surface 38C is about 25 to about 35 degrees, as shown in Fig. 6. In some embodiments, the angle A1 is about 28 to about 32 degrees. In some embodiments, the angle A1 formed between the second surface 38B and the third surface 38C is about 30.5 degrees. In some embodiments, the first protrusion 38 has a first height H1 of about 2 millimeters to about 4 millimeters, as shown in Fig. 4. In some embodiments, the first height H1 is about 3 millimeters.

In some embodiments, each of the plurality of fasteners 32 optionally includes a second protrusion 54 spaced apart from the first protrusion 38, as shown in Fig. 3. The second protrusion 54 extends away from the head 34. The second protrusion 54 of the first fastener 32A engages the second protrusion 54 of the second fastener 32B, as suggested in Figs. 10 and 11, to rotate the first fastener 32A relative to the plate 30 and the horizontal support 14 thereby causing the first fastener 32A to secure the deck plank 16 to the horizontal support 14.

The second protrusion 54 of each of the plurality of fasteners 32 defines a first surface 54A, a second surface 54B, and a third surface 54C, as shown in Figs. 3 and 6. At least a portion of the first surface 54A is spaced apart from and parallel to the outer surface 34T of the head 34. The second surface 54B extends between the first surface 54A and the outer surface 34T of the head 34. The third surface 54C is located opposite the second surface 54B and extends between the first surface 54A and the outer surface 34T of the head 34.

In some embodiments, the angle A1 is formed between the second surface 54B and the third surface 54C. In some embodiments, the second protrusion 54 has the first height H1.

As shown in Fig. 6, the second surface 38B of the first protrusion 38 is in a first plane and the third surface 54C of the second protrusion 54 is in the first plane. The third surface 38C of the first protrusion 38 is in a second plane different than the first plane, and the second surface 54B of the second protrusion 54 is in the second plane.

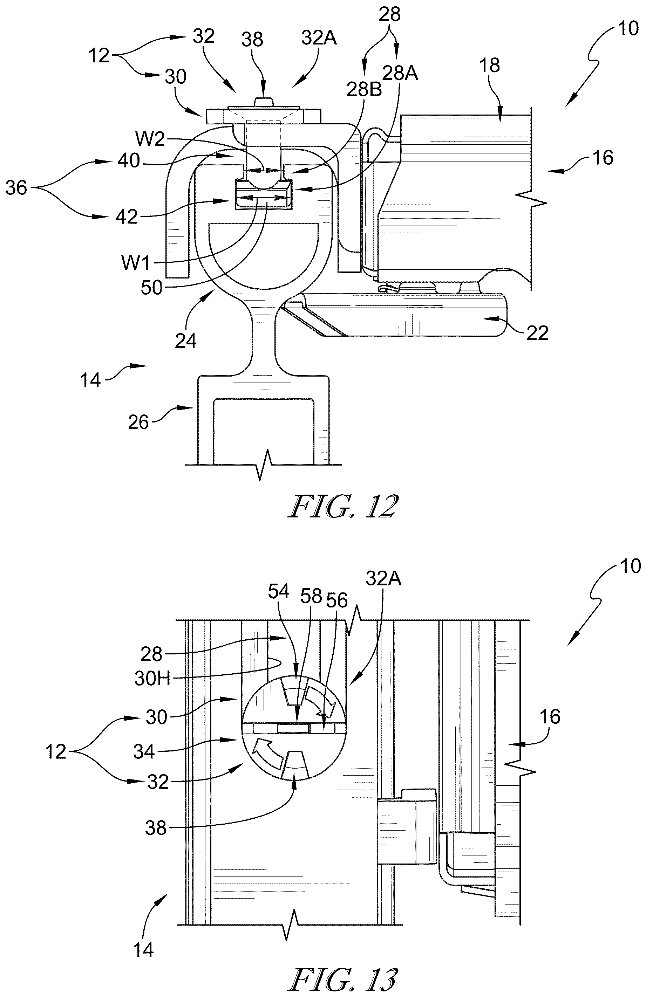

The first fastener 32A is moveable between a first position, as shown in Figs. 8-11, and a second position, as shown in Figs. 12 and 13. The second fastener 32B may be used to move the first fastener 32A between the first and second positions. In the first position, which may be referred to as an unlocked position, the first fastener 32A is free for removal from the horizontal support 14 and the plate 30 thereby allowing the deck plank 16 to be separated from the horizontal support 14. In the second position, which may be referred to as a locked position, the first fastener 32A is rotated relative to the horizontal support 14 and the plate 30 so that the first fastener 32A is blocked from being removed from the horizontal support 14 and the plate 30 thereby blocking the deck plank 16 from lifting off of and being separated from the horizontal support 14.

To secure the deck plank 16 to the horizontal support 14, the at least one attachment member 20 is positioned over the rail 24 of the horizontal support 14, as shown in Fig. 2. The plate 30 is positioned on top of the at least one attachment member 20 so that the plate 30 extends along the rail 24. The first fastener 32A is inserted through the through hole 30H of the plate 30 and into the opening 28 of the rail 24 so that the first fastener 32A is in the first position. While in the first position, the base 42 of the body 36 of the first fastener 32A is located in the first portion 28A of the opening 28 of the rail 24 and the shaft 40 is located in the second portion 28B of the opening 28. The tapered head 34 of the first fastener 32A is located at least partially in the through hole 30H of the plate 30.

As shown in Fig. 8, while the first fastener 32A is in the first position, the first fastener 32A is free for removal from the rail 24 and the plate 30. The third width W3 of the base 42 is less than the second width W2 of the second portion 28B of the opening 28, which allows the first fastener 32A to be removed from the opening 28 while in the first position.

As shown in Fig. 10, the second fastener 32B is flipped 180 degrees relative to the first fastener 32A to be used as the installation tool or aid. The second surface 38B of the first protrusion 38 of the second fastener 32B engages the second surface 38B of the first protrusion 38 of the first fastener 32A, as shown in Figs. 10 and 11. The second surface 54B of the second protrusion 54 of the second fastener 32B engages the second surface 54B of the second protrusion 54 of the first fastener 32A, as shown in Figs. 10 and 11. As shown in Fig. 11, the first surfaces 38A, 54A of the protrusions 38, 54 of the second fastener 32B engage the outer surface 34T of the head 34 of the first fastener 32A. The first surfaces 38A, 54A of the protrusions 38, 54 of the first fastener 32A engage the outer surface 34T of the head 34 of the second fastener 32B. In this way, the first and second fasteners 32A, 32B interlock with one another.

After the second fastener 32B engages the first fastener 32A, as shown in Fig. 11, the second fastener 32B is rotated in a first rotational direction by the worker to rotate the first fastener 32A in the first rotational direction. In illustrative embodiments, the first fastener 32A is rotated about 90 degrees. The non-chamfered edges 52C, 52D of the base 42 of the first fastener 32A prevent rotation in a second rotational direction opposite the first rotational direction while the first fastener 32A is in the first position. Further, the non-chamfered edges 52C, 52D of the base 42 of the first fastener 32A prevent additional rotation of the first fastener 32A in the first rotational direction after the first fastener 32A is in the second position.

As shown in Fig. 12, while the first fastener 32A is in the second position, the first fastener 32A is blocked from removal from the rail 24 and the plate 30. The first length L1 of the base 42 is greater than the second width W2 of the second portion 28B of the opening 28, which prevents the first fastener 32A from being removed from the opening 28 while in the second position. In this way, the first fastener 32A is secured to the plate 30 and the horizontal support 14. Because the plate 30 extends over the at least one attachment member 20, the deck plank 16 is secured to the horizontal support 14 by the plate 30 and the first fastener 32A.

To remove the first fastener 32A from the horizontal support 14, the first fastener 32A is moved from the second position back to the first position by the second fastener 32B. The second fastener 32B engages the first fastener 32A, as described above, and the second fastener 32B is rotated in the second rotational direction to rotate the first fastener 32A in the second rotational direction. In illustrative embodiments, the first fastener 32A is rotated about 90 degrees.

Turning back to the head 34, the head 34 of each of the plurality of fasteners 32 is optionally formed to include a first slot 56 extending into the head 34 from the outer surface 34T thereof toward the body 36, as shown in Figs. 3, 4, and 6. In some embodiments, the first slot 56 extends into the head 34 along an entirety of the diameter of the head 34. In some embodiments, the first slot 56 extends into the head 34 along a portion of the diameter of the head 34 (i.e., the first slot 56 does not extend along the entirety of the diameter). In some embodiments, the head 34 of each of the plurality of fasteners 32 is optionally formed to include a second slot 58 extending into the head 34 from a bottom surface of the first slot 56 toward the body 36, as shown in Figs. 6 and 9. The second slot 58 extends into the head 34 along only a portion of the diameter of the head 34. In other words, the second slot 58 has a smaller length than the first slot 56. The slots 56, 58 are located between the first protrusion 38 and the second protrusion 54.

If the workers are carrying a screwdriver, the slots 56, 58 allow the workers to use the screwdriver to rotate the first fastener 32A instead of using the second fastener 32B. Further, the different sized slots 56, 58 allow the workers to use different sized screwdrivers without stripping the first slot 56. The first slot 56 allows for the use of a larger screwdriver (i.e., about 0.5 inches or larger drive screwdriver) to rotate the first fastener 32A, and the second slot 58 allows for the use of a smaller screwdriver (i.e., about 0.25 inches or smaller drive screwdriver) to rotate the first fastener 32A.

While the first fastener 32A is in the first position, the slots 56, 58 extend in a first direction relative to the plate 30 and the horizontal support 14, as shown in Fig. 9. While the first fastener 32A is in the second position, the slots 56, 58 extend in a second direction relative to the plate 30 and the horizontal support 14 that is perpendicular to the first direction, as shown in Fig. 13. In some embodiments, the first direction is parallel to the plate 30 and the horizontal support 14 and the second direction is perpendicular to the plate 30 and the horizontal support 14. In this way, the worker is aware of the position of the first fastener 32A based on the orientation of the slots 56, 58.

In some embodiments, a height of a portion of the head 34 that is located exterior to the plate 30 plus a height of the first protrusion 38 or the second protrusion 54 is about 4 millimeters of less. A height of the portion of the head 34 that is located exterior to the plate 30 may be about 1 millimeter or less.

As previously described, the scaffolding assembly 10 may include any number of deck planks 16, horizontal supports 14, plates 30, and fasteners 32. For example, three fasteners 32 may be used per each plate 30 such that a fastener 32 is located on each lateral side of the two attachment members 20, as shown in Fig. 2.

Additionally, the scaffolding assembly 10 may comprise different kinds of horizontal supports (i.e., horizontal ledgers and rails with support beams). In one example, the deck plank 16 may be supported by two spaced apart horizontal ledgers. In another example, the deck plank 16 may be supported by one horizontal ledger and one rail with the support beam spaced apart from the horizontal ledger, as shown in Figs. 1 and 2. In another example, the deck plank 16 may be supported by two spaced apart rails with support beams. The support beam and the rail may be the support beam of PCT Application Serial No. PCT/CN2022/121932 filed 28 September 2022, which is each expressly incorporated by reference herein.

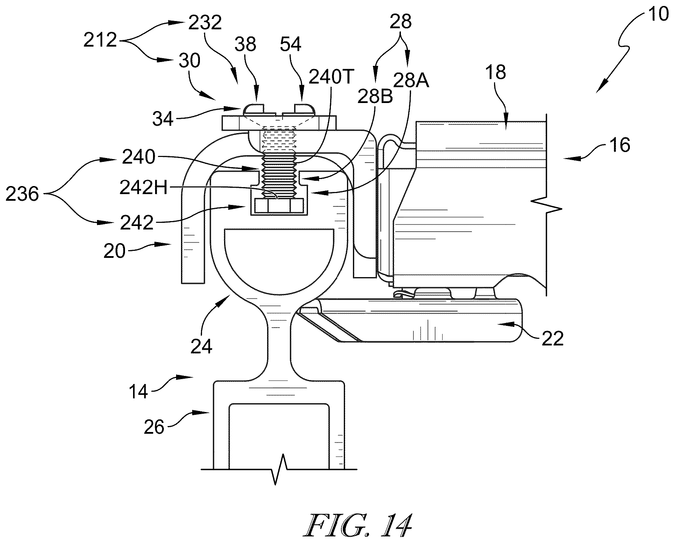

Another embodiment of an anti-lift off system 212 is shown in Fig. 14. The anti-lift off system 212 is substantially similar to the anti-lift off system 12 shown in Figs. 1-13 and described herein. Accordingly, similar reference numbers in the 200 series indicate features that are common between the anti-lift off system 212 and the anti-lift off system 12. The description of the anti-lift off system 12 is incorporated by reference to apply to the anti-lift off system 212, except in instances when it conflicts with the specific description and the drawings of the anti-lift off system 212.

The anti-lift off system 212 includes the plate 30, as previously described, and a plurality of fasteners 232, as shown in Fig. 14. As compared to the plurality of fasteners 32, the plurality of fasteners 232 include a different body 236.

The body 236 extends away from the head 34, as shown in Fig. 14. The body 236 includes a shaft 240 and a base 242. The shaft 240 is coupled to the head 34 to extend away from the head 34. The base 242 is coupled to the shaft 240 to locate the shaft 240 between the head 34 and the base 242. In some embodiments, as shown in Fig. 14, the shaft 240 is formed to include threads 240T. In some embodiments, the base 242 is removably coupled with the shaft 240. In some embodiments, the base 242 is a nut.

To secure the deck plank 16 to the horizontal support 14, the base 242 is slid into the opening 28 of the rail 24 from a terminal end thereof. Then, the shaft 240 of the body 236 is inserted into the through hole 30H of the plate 30 and the opening 28 of the rail 24. The shaft 240 is aligned with the base 242. The protrusions 38, 54, the head 34, and the shaft 240 are rotated via a second fastener of the plurality of fasteners 232. Due to the rotation, the threads 240T of the shaft 240 mate with a threaded hole 242H of the base 242 thereby securing the deck plank 16 to the horizontal support 14.

A method is provided herein. The method may include inserting the first fastener 32A through the plate 30 and into the horizontal support 14 so that at least a portion of the head 34 of the first fastener 32A is located exterior to the plate 30. The method may include positioning the head 34 of the second fastener 32B on top of the head 34 of the first fastener 32A.

The method may include engaging the first protrusion 38 of the first fastener 32A with the first protrusion 38 of the second fastener 32B. The method may include rotating the second fastener 32B in a first direction to cause the first fastener 32A to rotate in the first direction relative to the plate 30 and the horizontal support 14 to block removal of the first fastener 32A from the plate 30 and the horizontal support 14. The method may include blocking separation of the plate 30 from the horizontal support 14 via the first fastener 32A.

In some embodiments, the step of engaging the first protrusion 38 of the first fastener 32A with the first protrusion 38 of the second fastener 32B further includes engaging the second protrusion 54 of the first fastener 32A with the second protrusion 54 of the second fastener 32B. The method may include, after the step of rotating the second fastener 32B in the first direction, moving the second fastener 32B away from the first fastener 32A.
The method may include, after the step of blocking separation of the plate 30 from the horizontal support 14 via the first fastener 32A: positioning the head 34 of the second fastener 32B on top of the head 34 of the first fastener 32A, engaging the first protrusion 38 of the first fastener 32A with the first protrusion 38 of the second fastener 32B, rotating the second fastener 32B in a second direction opposite the first direction to cause the first fastener 32A to rotate in the second direction relative to the plate 30 and the horizontal support 14, removing the first fastener 32A from the plate 30 and the horizontal support 14, and separating the plate 30 from the horizontal support 14.

In some embodiments, the step of positioning the head 34 of the second fastener 32B on top of the head 34 of the first fastener 32A includes engaging the outer surface 34T of the head 34 of the first fastener 32A with the first surface 38A of the first protrusion 38 of the second fastener 32B and engaging the outer surface 34T of the head 34 of the second fastener 32B with the first surface 38A of the first protrusion 38 of the first fastener 32A.

In some embodiments, the step of rotating the second fastener 32B in the first direction includes rotating the first fastener 32A about 90 degrees. The method may include inserting the body 36 of the first fastener 32A into the opening 28 formed in the horizontal support 14. In some embodiments, after the step of inserting the body 36 of the first fastener 32A into the opening 28 and before the step of rotating the second fastener 32B in the first direction, the first fastener 32A is free for removal from the plate 30 and the horizontal support 14.

In some embodiments, the step of rotating the second fastener 32B in the first direction includes blocking removal of the first fastener 32A from the opening 28 via engagement of the body 36 of the first fastener 32A with the second portion 28B of the opening 28. The method may include positioning the at least one attachment member 20 of the deck plank 16 on the horizontal support 14 to support the deck plank 16 on the horizontal support 14. The method may include positioning the plate 30 over the at least one attachment member 20 and the horizontal support 14 to locate the at least one attachment member 20 between the plate 30 and the horizontal support 14.

The following numbered clauses include embodiments that are contemplated and non-limiting:
Clause 1. A scaffolding assembly comprising a horizontal support.
Clause 1.1. The scaffolding assembly of clause 1, any other clause, or any combination of suitable clauses, further comprising a deck plank removably supported on the horizontal support, the deck plank including a platform that provides a work surface for a user of the scaffolding assembly and at least one attachment member coupled to the platform and supported by the horizontal support.
Clause 1.2. The scaffolding assembly of clause 1.1, any other clause, or any combination of suitable clauses, further comprising an anti-lift off system including a plate and a plurality of fasteners in which each of the plurality of fasteners is substantially similar.
Clause 1.3. The scaffolding assembly of clause 1.2, any other clause, or any combination of suitable clauses, wherein the plate is aligned with the horizontal support and extends over the at least one attachment member of the deck plank.
Clause 1.4. The scaffolding assembly of clause 1.3, any other clause, or any combination of suitable clauses, wherein the plurality of fasteners includes a first fastener and a second fastener, the first fastener extending through the plate and into the horizontal support to secure the deck plank to the horizontal support to prevent unintentional lift off and removal of the deck plank from the horizontal support during use of the scaffolding assembly.
Clause 1.5. The scaffolding assembly of clause 1.4, any other clause, or any combination of suitable clauses, wherein the second fastener is arranged to engage the first fastener to rotate the first fastener relative to the plate and the horizontal support thereby causing the first fastener to secure the deck plank to the horizontal support.
Clause 2. The scaffolding assembly of clause 1, any other clause, or any combination of suitable clauses, wherein each of the plurality of fasteners includes a head, a body extending away from the head, and a first protrusion extending away from the head opposite the body to locate the head between the first protrusion and the body.
Clause 3. The scaffolding assembly of clause 2, any other clause, or any combination of suitable clauses, wherein the first protrusion of the second fastener engages the first protrusion of the first fastener to rotate the first fastener relative to the plate and the horizontal support thereby causing the first fastener to secure the deck plank to the horizontal support.
Clause 4. The scaffolding assembly of any of clauses 2-3, any other clause, or any combination of suitable clauses, wherein the first protrusion of each of the plurality of fasteners defines a first surface, a second surface extending between the first surface and the head, and a third surface opposite the second surface and extending between the first surface and the head.
Clause 5. The scaffolding assembly of clause 4, any other clause, or any combination of suitable clauses, wherein the second side of the first protrusion of the second fastener engages the second side of the first protrusion of the first fastener to rotate the first fastener relative to the plate and the horizontal support.
Clause 6. The scaffolding assembly of any of clauses 2-5, any other clause, or any combination of suitable clauses, wherein each of the plurality of fasteners further includes a second protrusion extending away from the head in spaced apart relation to the first protrusion.
Clause 7. The scaffolding assembly of clause 6, any other clause, or any combination of suitable clauses, wherein the first protrusion of each of the plurality of fasteners defines a first surface, a second surface extending between the first and the head, and a third surface opposite the second surface and extending between the first surface and the head.
Clause 7.1. The scaffolding assembly of clause 7, any other clause, or any combination of suitable clauses, wherein the second protrusion of each of the plurality of fasteners defines a first surface, a second surface extending between the first surface of the second protrusion and the head, and a third surface opposite the second surface of the second protrusion and extending between the first surface of the second protrusion and the head.
Clause 8. The scaffolding assembly of clause 7, any other clause, or any combination of suitable clauses, wherein the second surface of the first protrusion is in a first plane and the third surface of the second protrusion is in the first plane.
Clause 8.1. The scaffolding assembly of clause 8, any other clause, or any combination of suitable clauses, wherein the third surface of the first protrusion is in a second plane different than the first plane and the second surface of the second protrusion is in the second plane.
Clause 9. The scaffolding assembly of any of clauses 7-8, any other clause, or any combination of suitable clauses, wherein the second surface of the first protrusion of the second fastener engages the second surface of the first protrusion of the first fastener and the third surface of the second protrusion of the second fastener engages the third surface of the second protrusion of the first fastener to rotate the first fastener relative to the plate and the horizontal support.
Clause 10. The scaffolding assembly of any of clauses 2-9, any other clause, or any combination of suitable clauses, wherein the first fastener is moveable relative to the horizontal support and the plate between a first position, in which the first fastener is free for removal from the horizontal support and the plate to allow the deck plank to be separated from the horizontal support, and a second position, in which the first fastener is rotated relative to the horizontal support and the plate by the second fastener so that the first fastener is blocked from being removed from the horizontal support and the plate thereby blocking the deck plank from lifting off of and being removed from the horizontal support.
Clause 11. The scaffolding assembly of clause 10, any other clause, or any combination of suitable clauses, wherein the body of each of the plurality of fasteners includes a shaft coupled to the head and extending away therefrom and a base coupled to the shaft to locate the shaft between the head and the base.
Clause 12. The scaffolding assembly of clause 11, any other clause, or any combination of suitable clauses, wherein the base of each of the plurality of fasteners defines a first width and a first length, and the first length is greater than the first width.
Clause 13. The scaffolding assembly of any of clauses 11-12, any other clause, or any combination of suitable clauses, wherein the base of each of the plurality of fasteners defines a first chamfered edge, a second chamfered edge opposite the first chamfered edge, a third edge located between the first chamfered edge and the second chamfered edge, and a fourth edge opposite the third edge.
Clause 14. The scaffolding assembly of clause 13, any other clause, or any combination of suitable clauses, wherein the third edge and the fourth edge both define right angles.
Clause 15. The scaffolding assembly of any of clauses 12-14, any other clause, or any combination of suitable clauses, wherein the horizontal support includes a rail having an opening that extends into the rail to receive the first fastener, and wherein the at least one attachment member of the deck plank extends over the rail of the horizontal support.
Clause 16. The scaffolding assembly of clause 15, any other clause, or any combination of suitable clauses, wherein the opening of the rail includes a first portion at a bottom end of the opening and a second portion at a top end of the opening adjacent the plate of the anti-lift off system, the first portion having a second width and the second portion having a third width that is less than the second width.
Clause 17. The scaffolding assembly of clause 16, any other clause, or any combination of suitable clauses, wherein the first fastener is located in the opening of the rail so that the shaft of the first fastener is located within the second portion of the opening and the base of the first fastener is located within the first portion of the opening.
Clause 18. The scaffolding assembly of any of clauses 16-17, any other clause, or any combination of suitable clauses, wherein, while the first fastener is in the first position, the first width of the base allows the first fastener to be removed from the opening of the rail, the first width being less than the third width of the second portion of the opening.
Clause 19. The scaffolding assembly of any of clauses 16-18, any other clause, or any combination of suitable clauses, wherein, while the first fastener is in the second position, the first length of the base blocks removal of the first fastener from the opening of the rail, the first length being greater than the third width of the second portion of the opening.
Clause 20. The scaffolding assembly of any of clauses 11-19, any other clause, or any combination of suitable clauses, wherein the shaft is non-threaded.
Clause 21. The scaffolding assembly of any of clauses 11-19, any other clause, or any combination of suitable clauses, wherein the shaft is formed to include threads.
Clause 22. The scaffolding assembly of any of clauses 2-21, any other clause, or any combination of suitable clauses, wherein the head of each of the plurality of fasteners is formed to include a first slot extending into the head from an outer surface thereof toward the body, the first slot extending into the head along an entirety of a diameter of the head.
Clause 23. The scaffolding assembly of clause 22, any other clause, or any combination of suitable clauses, wherein the head of each of the plurality of fasteners is formed to include a second slot extending into the head from a bottom surface of the first slot toward the body, and wherein the second slot extends into the head along only a portion of the diameter of the head.
Clause 24. The scaffolding assembly of any of clauses 2-23, any other clause, or any combination of suitable clauses, wherein the first protrusion and a portion of the head that extends outwardly beyond the plate has a height of about 4 millimeters or less.
Clause 25. A method comprising inserting a first fastener through a plate and into a horizontal support so that at least a portion of a head of the first fastener is located exterior to the plate.
Clause 25.1. The method of clause 25, any other clause, or any combination of suitable clauses, further comprising positioning a head of a second fastener on top of the head of the first fastener.
Clause 25.2. The method of clause 25.1, any other clause, or any combination of suitable clauses, further comprising engaging a first protrusion of the first fastener with a first protrusion of the second fastener.
Clause 25.3. The method of clause 25.2, any other clause, or any combination of suitable clauses, further comprising rotating the second fastener in a first direction to cause the first fastener to rotate in the first direction relative to the plate and the horizontal support to block removal of the first fastener from the plate and the horizontal support.
Clause 25.4. The method of clause 25.3, any other clause, or any combination of suitable clauses, further comprising blocking separation of the plate from the horizontal support via the first fastener.
Clause 26. The method of clause 25, any other clause, or any combination of suitable clauses, wherein the step of engaging a first protrusion of the first fastener with a first protrusion of the second fastener further includes engaging a second protrusion of the first fastener with a second protrusion of the second fastener.
Clause 27. The method of any of clauses 25-26, any other clause, or any combination of suitable clauses, further comprising, after rotating the second fastener in a first direction, moving the second fastener away from the first fastener.
Clause 28. The method of any of clauses 25-27, any other clause, or any combination of suitable clauses, further comprising, after blocking separation of the plate from the horizontal support via the first fastener: positioning the head of the second fastener on top of the head of the first fastener, engaging the first protrusion of the first fastener with the first protrusion of the second fastener, rotating the second fastener in a second direction opposite the first direction to cause the first fastener to rotate in the second direction relative to the plate and the horizontal support, removing the first fastener from the plate and the horizontal support, and separating the plate from the horizontal support.
Clause 29. The method of any of clauses 25-28, any other clause, or any combination of suitable clauses, wherein positioning a head of a second fastener on top of the head of the first fastener includes engaging an outer surface of the head of the first fastener with a first surface of the first protrusion of the second fastener and engaging an outer surface of the head of the second fastener with a first surface of the first protrusion of the first fastener.
Clause 30. The method of any of clauses 25-29, any other clause, or any combination of suitable clauses, wherein rotating the second fastener in a first direction includes rotating the first fastener about 90 degrees.
Clause 31. The method of any of clauses 25-30, any other clause, or any combination of suitable clauses, further comprising inserting a body of the first fastener into an opening formed in the horizontal support, the opening having a first portion at a bottom end of the opening and a second portion at a top end of the opening adjacent the plate, the first portion having a first width and the second portion having a second width that is less than the first width.
Clause 32. The method of clause 31, any other clause, or any combination of suitable clauses, wherein, after inserting a body of the first fastener into an opening and before the step of rotating the second fastener in a first direction, the first fastener is free for removal from the plate and the horizontal support.
Clause 33. The method of any of clauses 31-21, any other clause, or any combination of suitable clauses, wherein rotating the second fastener in a first direction includes blocking removal of the first fastener from the opening via engagement of the body of the first fastener with the second portion of the opening.
Clause 34. The method of any of clauses 25-33, any other clause, or any combination of suitable clauses, further comprising positioning at least one attachment member of a deck plank on the horizontal support to support the deck plank on the horizontal support.
Clause 35. The method of clause 34, any other clause, or any combination of suitable clauses, further comprising positioning the plate over the at least one attachment member and the horizontal support to locate the at least one attachment member between the plate and the horizontal support.
Clause 36. A fastener comprising a head.
Clause 36.1. The fastener of clause 36, any other clause, or any combination of suitable clauses, further comprising a body extending away from the head.
Clause 36.2. The fastener of clause 36.1, any other clause, or any combination of suitable clauses, further comprising a first protrusion extending away from the head opposite the body to locate the head between the first protrusion and the body.
Clause 36.3. The fastener of clause 36.2, any other clause, or any combination of suitable clauses, further comprising a second protrusion extending away from the head in spaced apart relation to the first protrusion.
Clause 36.4. The fastener of clause 36.3, any other clause, or any combination of suitable clauses, wherein the first protrusion and the second protrusion are configured to be engaged to rotate the fastener thereby causing the fastener to secure components to one another.
Clause 37. The fastener of clause 36, any other clause, or any combination of suitable clauses, wherein the first protrusion defines a first surface, a second surface extending between the first surface and the head, and a third surface opposite the second surface and extending between the first surface and the head.
Clause 38. The fastener of clause 37, any other clause, or any combination of suitable clauses, wherein the second protrusion defines a first surface, a second surface extending between the first surface of the second protrusion and the head, and a third surface opposite the second surface of the second protrusion and extending between the first surface of the second protrusion and the head.
Clause 39. The fastener of clause 38, any other clause, or any combination of suitable clauses, wherein the second surface of the first protrusion is in a first plane and the third surface of the second protrusion is in the first plane.
Clause 39.1. The fastener of clause 39, any other clause, or any combination of suitable clauses, wherein the third surface of the first protrusion is in a second plane different than the first plane and the second surface of the second protrusion is in the second plane.
Clause 40. The fastener of any of clauses 36-39, any other clause, or any combination of suitable clauses, wherein the body includes a shaft coupled to the head and extending away therefrom and a base coupled to the shaft to locate the shaft between the head and the base.
Clause 41. The fastener of clause 40, any other clause, or any combination of suitable clauses, wherein the base defines a first width and a first length, and the first length is greater than the first width.
Clause 42. The fastener of any of clauses 40-41, any other clause, or any combination of suitable clauses, wherein the base defines a first chamfered edge, a second chamfered edge opposite the first chamfered edge, a third edge located between the first chamfered edge and the second chamfered edge, and a fourth edge opposite the third edge.
Clause 43. The fastener of clause 42, any other clause, or any combination of suitable clauses, wherein the third edge and the fourth edge both define right angles.
Clause 44. The fastener of any of clauses 40-43, any other clause, or any combination of suitable clauses, wherein the shaft is non-threaded.
Clause 45. The fastener of any of clauses 40-43, any other clause, or any combination of suitable clauses, wherein the shaft is formed to include threads.
Clause 46. The fastener of any of clauses 36-45, any other clause, or any combination of suitable clauses, wherein the head is formed to include a first slot extending into the head from an outer surface thereof toward the body, the first slot extending into the head along an entirety of a diameter of the head.
Clause 47. The fastener of clause 46, any other clause, or any combination of suitable clauses, wherein the head is formed to include a second slot extending into the head from a bottom surface of the first slot toward the body, and wherein the second slot extends into the head along only a portion of the diameter of the head.

While the disclosure has been illustrated and described in detail in the foregoing drawings and description, the same is to be considered as exemplary and not restrictive in character, it being understood that only illustrative embodiments thereof have been shown and described and that all changes and modifications that come within the spirit of the disclosure are desired to be protected.

## Claims

1. A scaffolding assembly comprising:
a horizontal support,
a deck plank removably supported on the horizontal support, the deck plank including a platform that provides a work surface for a user of the scaffolding assembly and at least one attachment member coupled to the platform and supported by the horizontal support, and
an anti-lift off system including a plate and a plurality of fasteners in which each of the plurality of fasteners is substantially similar, the plate being aligned with the horizontal support and extending over the at least one attachment member of the deck plank, the plurality of fasteners including a first fastener and a second fastener, the first fastener extending through the plate and into the horizontal support to secure the deck plank to the horizontal support to prevent unintentional lift off and removal of the deck plank from the horizontal support during use of the scaffolding assembly, and the second fastener arranged to engage the first fastener to rotate the first fastener relative to the plate and the horizontal support thereby causing the first fastener to secure the deck plank to the horizontal support.

2. The scaffolding assembly of claim 1, wherein each of the plurality of fasteners includes a head, a body extending away from the head, and a first protrusion extending away from the head opposite the body to locate the head between the first protrusion and the body.

3. The scaffolding assembly of claim 2, wherein the first protrusion of the second fastener engages the first protrusion of the first fastener to rotate the first fastener relative to the plate and the horizontal support thereby causing the first fastener to secure the deck plank to the horizontal support.

4. The scaffolding assembly of any of the claims 2 to 3, wherein each of the plurality of fasteners further includes a second protrusion extending away from the head in spaced apart relation to the first protrusion.

5. The scaffolding assembly of claim 4, wherein the first protrusion of each of the plurality of fasteners defines a first surface, a second surface extending between the first surface and the head, and a third surface opposite the second surface and extending between the first surface and the head, and wherein the second protrusion of each of the plurality of fasteners defines a first surface, a second surface extending between the first surface of the second protrusion and the head, and a third surface opposite the second surface of the second protrusion and extending between the first surface of the second protrusion and the head,
wherein the second surface of the first protrusion preferably is in a first plane and the third surface of the second protrusion preferably is in the first plane, and wherein the third surface of the first protrusion preferably is in a second plane different than the first plane and the second surface of the second protrusion preferably is in the second plane.

6. The scaffolding assembly of any of the claims 1 to 5, wherein the first fastener is moveable relative to the horizontal support and the plate between a first position, in which the first fastener is free for removal from the horizontal support and the plate to allow the deck plank to be separated from the horizontal support, and a second position, in which the first fastener is rotated relative to the horizontal support and the plate by the second fastener so that the first fastener is blocked from being removed from the horizontal support and the plate thereby blocking the deck plank from lifting off of and being removed from the horizontal support.

7. The scaffolding assembly of any of claims 2 to 6, wherein the body of each of the plurality of fasteners includes a shaft coupled to the head and extending away therefrom and a base coupled to the shaft to locate the shaft between the head and the base, and wherein the base of each of the plurality of fasteners preferably defines a first width and a first length, and the first length preferably is greater than the first width.

8. The scaffolding assembly of any of the claims 1 to 7, wherein the horizontal support includes a rail having an opening that extends into the rail to receive the first fastener, and wherein the at least one attachment member of the deck plank extends over the rail of the horizontal support, and
wherein the opening of the rail preferably includes a first portion at a bottom end of the opening and a second portion at a top end of the opening adjacent the plate of the anti-lift off system, the first portion preferably having a second width and the second portion preferably having a third width that is less than the second width.

9. The scaffolding assembly of claim 8, wherein, while the first fastener is in the first position, the first width of the base allows the first fastener to be removed from the opening of the rail, the first width being less than the third width of the second portion of the opening, and, wherein, while the first fastener is in the second position, the first length of the base blocks removal of the first fastener from the opening of the rail, the first length being greater than the third width of the second portion of the opening.

10. The scaffolding assembly of any of the claims 2 to 9, wherein the head of each of the plurality of fasteners is formed to include a first slot extending into the head from an outer surface thereof toward the body, the first slot extending into the head along an entirety of a diameter of the head, and wherein the head of each of the plurality of fasteners preferably is formed to include a second slot extending into the head from a bottom surface of the first slot toward the body, and wherein the second slot preferably extends into the head along only a portion of the diameter of the head.

11. A method, in particular for assembling a scaffolding assembly of any of claims 3 to 10 in combination with claim 2, comprising:
inserting a first fastener through a plate and into a horizontal support so that at least a portion of a head of the first fastener is located exterior to the plate,
positioning a head of a second fastener on top of the head of the first fastener,
engaging a first protrusion of the first fastener with a first protrusion of the second fastener,
rotating the second fastener in a first direction to cause the first fastener to rotate in the first direction relative to the plate and the horizontal support to block removal of the first fastener from the plate and the horizontal support, and
blocking separation of the plate from the horizontal support via the first fastener.

12. The method of claim 11, wherein engaging a first protrusion of the first fastener with a first protrusion of the second fastener includes engaging a second protrusion of the first fastener with a second protrusion of the second fastener, and
wherein positioning a head of a second fastener on top of the head of the first fastener preferably includes engaging an outer surface of the head of the first fastener with a first surface of the first protrusion of the second fastener and engaging an outer surface of the head of the second fastener with a first surface of the first protrusion of the first fastener.

13. The method of any of the claims 11 to 12, further comprising, after blocking separation of the plate from the horizontal support via the first fastener:
positioning the head of the second fastener on top of the head of the first fastener,
engaging the first protrusion of the first fastener with the first protrusion of the second fastener,
rotating the second fastener in a second direction opposite the first direction to cause the first fastener to rotate in the second direction relative to the plate and the horizontal support,
removing the first fastener from the plate and the horizontal support, and
separating the plate from the horizontal support.

14. The method of any of the claims 11 to 13, further comprising inserting a body of the first fastener into an opening formed in the horizontal support, the opening having a first portion at a bottom end of the opening and a second portion at a top end of the opening adjacent the plate, the first portion having a first width and the second portion having a second width that is less than the first width, and
wherein the rotating the second fastener in a first direction preferably includes blocking removal of the first fastener from the opening via engagement of the body of the first fastener with the second portion of the opening.

15. The method of any of the claims 11 to 14, further comprising positioning at least one attachment member of a deck plank on the horizontal support to support the deck plank on the horizontal support and positioning the plate over the at least one attachment member and the horizontal support to locate the at least one attachment member between the plate and the horizontal support.
